# EUROPEAN PATENT SPECIFICATION

(11) **EP 0 623 373 B1**
(45) Date of publication and mention of the grant of the patent: **29.01.1997**
(21) Application number: 94111605.5
(22) Date of filing: 20.11.1989
(51) Int. Cl.: B01D 39/20, B60R 21/26, B21F 27/18

(54) **Method of producing a filter for a gas producer**
METHODE ZUR HERSTELLUNG EINES FILTERS FÜR EINEN VERGASER
Procédé de fabrication d'un filtre pour producteur de gaz

(30) Priority: 24.11.1988 JP 296923/88; 16.12.1988 JP 318996/88; 16.12.1988 JP 318997/88
(43) Date of publication of application: 09.11.1994
(62) Divisional of application: 89312018.8
(73) Proprietor: NGK INSULATORS, LTD., Nagoya City Aichi Pref. (JP)
(72) Inventor: Maruyama, Katsuhiro, Midori-Ku, Nagoya City, Aichi Pref. (JP); Minoura, Michinori, Nagoya City, Aichi Pref. (JP)
(74) Representative: Paget, Hugh Charles Edward

(56) References cited:
- EP-A- 0 012 627
- EP-A- 0 270 510
- US-A- 2 047 634
- US-A- 2 224 172
- US-A- 2 341 097
- US-A- 4 463 959

## Description

This invention relates to a method of producing a filter for a gas producer such as is used for expanding a bag for producing floating force and an air bag for protecting a personnel when collision of a vehicle, closing or opening a valve in emergency, injecting a gas into a seat in emergency and the like.

Systems using high temperature gases produced by igniting a gunpowder have been widely used as gas producers. In this case, filters are needed for cooling the gases and collecting harmful components in the gases in order to avoid damage of bags and the like.

Reference should be made to European prior application no. 89312018.8 (publication no. 0370734) from which the present application is divided, for a description of the prior art and of filters which can be used by the method of the present invention.

It is an object of the invention to provide a method of producing a filter for a gas producer, for example a filter as set out in the application 89312018.8.

Reference B also made to EP-A-0 012 627 which shows woven screens placed over a pressed wire filter at the gas inlet and exit sides, to avoid loosening of the wires.

The method of the present invention is set out in claim 1.

In a preferred embodiment of the invention, the wire or wires having wavy curvature are wound about a rotating column body to obtain an annular laminate which is supplied into an annular space in a die assembly to be compressed.

In this invention, various heat-resistant steel wires can be used, for example, stainless, nickel alloy, cobalt alloy steel wires and the like. If a wire diameter of the steel wire is less than 0.1 mm, there is a risk of melting down. On the other hand, if it is more than 1.5 mm, it becomes difficult to form the wire into a curved wire because of increased resistance to be deformed and a filter made of the wire includes excessive clearances resulting in poor cooling effect for gases passing therethrough and poor collection effect of harmful compositions.

The heat-resistant steel wire may be a usual long wire made by drawing it through a drawing die. Moreover, a short wire of the order of 50-300 mm made according to a method called as "melt extraction method" is inexpensive and preferable. In the melt extraction method, a rotating water-cooled disc is brought into contact with a surface of a molten steel so as to pick up a small amount of the molten steel to form fine fiber-like wires accumulated on a lateral side.

In this invention, a heat-resistant steel wire may be worked into any one of various curves which may be a sinusoidal or approximately sinusoidal wave, or a wave made of polygonal lines such as saw teeth or rectangular wave. A wire having a wavy curvature of a pitch P of 5-10 mm and a wave height H of 3-6 mm is particularly preferable because clearances between wire parts of a compressed formed product are not excessive and the wire parts are suitably entangled with each other to be a unitary body in a good condition.

According to a preferred method of the invention for producing a filter for a gas producer, after a heat-resistant steel wire has been worked in a curved wire, the curved wire is directly supplied into an annular space of a die assembly and compressed into an annular product. Therefore, the process is simple and an initial cost for an installation is inexpensive. A filter obtained by final compression into annular shape is a compressed formed product made of a curved wire so that the compressed product is elastic and in close contact with an inner wall surface of a casing and curved wire parts are entangled with each other so as to form a unitary body which is difficult to be deformed and easy in handling.

After the binding wires are wound around sections of a primary formed product, the primary formed product with the binding wires is further compressed into an annular shape to obtain a filter. Therefore, the binding wires of the filter prevent the wire parts from loosening. Even if short curved wires are used, ends of the short curved wires are prevented from extending laterally and the filter is more difficult to deform and easy to handle.

The invention will be more fully understood by referring to the following detailed description of two embodiments of the invention and the appended drawings.
Figs. 1a-1f are explanatory views of a first process for producing a filter embodying the invention; and
Figs. 2a-2f are explanatory views of a second process for producing a filter embodying the invention.

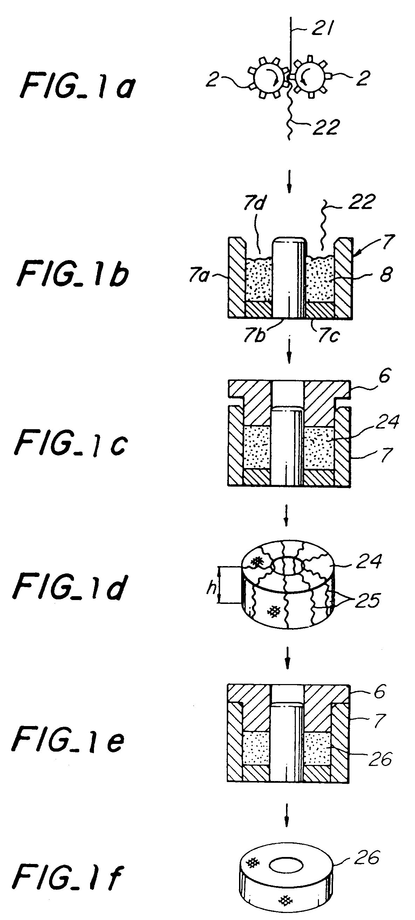

Figs. 1a-1f illustrate a first embodiment of the invention. A stainless steel wire (heat resistant steel wire) 21 produced by the melt extraction method and having a diameter of 0.25 mm and a length of 50-100 mm is passed between gears 2 in mesh with each other with clearances to be bent in a plane to obtain a curved wire 22 having a pitch of 7 mm and a wave height of 4 mm (Fig. 1a).

The curved wire 22 is supplied into an annular space 7d of a lower die 7 to form a laminated filling layer 8 (Fig. 1b). The laminated layer 8 is pressed by upper or male and lower or female dies 6 and 7 to form a first annular shaped product 24 higher in height by h than the filter 26 which is the final product (Figs. 1c and 1d).

Thereafter, several curved wires separately prepared as binding wires 25 similar to the curved wire 22 shown in Fig. 1a are wound around sections of the first shaped product 24 to prevent it from loosening (Fig. 1d).

The first shaped product 24 bound by the curved wires 25 is further compressed to an extreme extent by the upper or male and lower or female dies 6 and 7 (Fig. 1e) to obtain an annular filter 26 having a bulk specific gravity of 1.5 (Fig. 1f).

In the thus obtained filter 26, the binding wires 25 surround the formed product 24, prevent the curved wire 22 from loosening and particularly prevent ends of short curved wires 22 if used from laterally extending. Therefore, the obtained annular filter 26 is difficult to deform and is superior in self-support and is easy to handle.

In this embodiment, the processes shown in Figs. 1b and 1c may be eliminated. In this case, the curved wire is wound in an annular shape and binding wires 25 are wound around the annular-shaped wire as shown in Fig. 1d without initial pressing. Thereafter, the annular-shaped wire is compressed by the die assembly to obtain an annular filter 26.

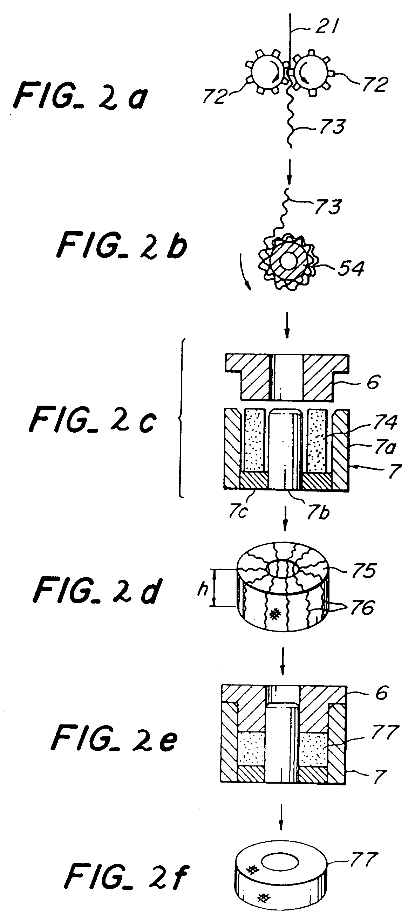

Figs. 2a-2f illustrate a fifth embodiment of the invention. A stainless steel wire (heat-resistant steel wire) 21 produced by the melt extraction method and having a diameter of 0.8 mm and a length of 250-300 mm is passed between gears 72 in mesh with each other with clearances to be bent to obtain a curved wire 73 having a pitch of 7 mm and a wave height of 4 mm (Fig. 2a).

The curved wire 73 is wound about a rotating column body 54 (Fig. 2b) to obtain an annular laminate 74 which is then compressed by a die assembly consisting of an upper die or male die 6 and a lower die or female die 7 to obtain a first annular shaped product 75 having a height h higher than that of the filter 77 which is the final product (Figs. 2c and 2d).

The first shaped product bound by the curved wires 76 is further compressed to an extreme extent by the die consisting of the upper or male die 6 and the lower or female die 7 (Fig. 2e) to obtain an annular filter 77 having a bulk specific gravity of 1.5 (Fig. 2f).

In the thus obtained filter 77, the binding wires 76 surround the shaped product 75 to prevent the curved wire 73 from loosening and particularly prevent ends of short curved wires 73 if used from laterally extending. Therefore, the obtained annular filter 77 is difficult to deform and is superior in self holding and is easy to handle.

## Claims

1. A method of producing a filter for a gas producer comprising the steps of forming at least one wire (22,73) of wire diameter in the range of 0.1-1.5 mm having wavy curvature into an annular body (8), and compressing the body, characterised by the step of binding wires (25,76) around the annular body (8) so that the binding wires extend over both the inside and outside peripheral faces of the body as well as the top and bottom faces thereof, and thereafter performing a compressing step on the body.

2. A method according to claim 1 wherein in compressing the body, it is compressed partially to obtain a first shaped product (24,75), thereafter the binding wires (25,76) are wound around regions of the first shaped product, and the first shaped product is then further compressed to obtain the filter.

3. A method as set forth in claim 1 or claim 2 wherein the or each said wire has a length of at least 50 mm.

4. A method as set forth in any one of claims 1 to 3 wherein the wire or wires having wavy curvature are obtained by a process including passing a wire between gears (2,72) in mesh with each other with clearances between them.

5. A method as set forth in any one of claims 1 to 4 wherein the wire or wires having wavy curvatures are supplied into an annular space in a die assembly (7) to form a body (8) to be compressed.

6. A method as set forth in any one of claims 1 to 4 wherein the wire or wires having wavy curvature are wound about a rotating mandrel (54) to obtain an annular body which is supplied into an annular space in a die assembly (7) to be compressed.

## Patentansprüche

1. Verfahren zur Herstellung eines Filters für einen Gaserzeuger, umfassend die Schritte des Formens zumindest eines Drahtes (22, 73) mit einem Drahtdurchmesser im Bereich von 0,1-1,5 mm mit wellenförmiger Krümmung zu einem ringförmigen Körper (8) und des Zusammenpressens des Körpers, gekennzeichnet durch den Schritt des Bindens von Drähten (25,76) um den ringförmigen Körper (8), sodaß sich die Bindungsdrähte sowohl über die innere als auch die äußere Umfangsfläche des Körpers und auch dessen Deck- und dessen Bodenfläche erstrecken, und die darauffolgende Durchführung eines Schritts des Zusammenpressens des Körpers.

2. Verfahren nach Anspruch 1, worin beim Zusammenpressen des Körpers dieser teilweise zusammengepreßt wird, um ein erstes Formerzeugnis (24, 75) zu erhalten, die Bindungsdrähte (25,76) daraufhin um Bereiche des ersten Formerzeugnisses gewickelt werden und das erste Formerzeugnis dann weiter zusammengepreßt wird, um den Filter zu erhalten.

3. Verfahren nach Anspruch 1 oder 2, worin der oder jeder Draht eine Länge von zumindest 50 mm aufweist.

4. Verfahren nach einem der Ansprüche 1 bis 3, worin der Draht oder die Drähte mit wellenförmiger Krümmung nach einem Verfahren erhalten werden, das das Hindurchschicken eines Drahtes zwischen Zahnräder (2,72) umfaßt, die sich im Eingriff miteinander befinden, wobei Zwischenräume dazwischen vorhanden sind.

5. Verfahren nach einem der Ansprüche 1 bis 4, worin der Draht oder die Drähte mit wellenförmiger Krümmung in einen ringfrömigen Raum in einer Prägeplattenanordnung (7) zugeführt werden, um einen zusammenzupressenden Körper (8) zu bilden.

6. Verfahren nach einem der Ansprüche 1 bis 4, worin der Draht oder die Drähte mit wellenförmiger Krümmung um einen sich drehenden Dorn (54) gewickelt wird/werden, um einen ringförmigen Körper zu erhalten, der in einen ringförmigen Raum in einer Prägeplattenanordnung (7) zugeführt wird, um zusammengepreßt zu werden.

## Revendications

1. Procédé de fabrication d'un filtre pour un producteur de gaz comprenant les étapes consistant à former au moins un fil (22, 73) d'un diamètre de fil dans la plage comprise entre 0,1-1,5 mm ayant une courbure ondulée en un corps annulaire (8) et à comprimer le corps, caractérisé par l'étape consistant à lier des fils (25, 76) autour du corps annulaire (8) de façon que les fils de liaison s'étendent à la fois sur les faces périphériques intérieure et extérieure du corps ainsi que sur les faces supérieure et inférieure de celui-ci, et en exécutant ensuite une étape de compression sur le corps.

2. Procédé selon la revendication 1, où lors de la compression du corps, celui-ci est comprimé partiellement pour obtenir un premier produit formé (24, 75), ensuite les fils de liaison (25, 76) sont enroulés autour de régions du premier produit formé, et le premier produit formé est ensuite comprimé davantage pour obtenir le filtre.

3. Procédé selon la revendication 1 ou la revendication 2, dans lequel le ou chaque filtre précité a une longueur d'au moins 50 mm.

4. Procédé selon l'une des revendications 1 à 3, dans lequel le ou les fils ayant une courbure ondulée sont obtenus par un procédé incluant le passage d'un fil entre des engrenages (2, 72) engrenant l'un avec l'autre, avec des jeux entre ceux-ci.

5. Procédé selon l'une des revendications 1 à 4, dans lequel le ou les fils ayant des courbures ondulées sont amenés dans un espace annulaire dans un ensemble à filières (7) pour former un corps (8) devant être comprimé.

6. Procédé selon l'une des revendications 1 à 4, où le ou les fils ayant une courbure ondulée sont enroulés autour d'un mandrin tournant (54) pour obtenir un corps annulaire qui est amené dans un espace annulaire dans un ensemble à filières (7) pour être comprimé.
